# EUROPÄISCHE PATENTANMELDUNG

(11) **EP 4 744 987 A1**
(43) Veröffentlichungstag der Anmeldung: **20.05.2026**
(21) Anmeldenummer: 25214463.9
(22) Anmeldetag: 07.11.2025
(51) Int. Cl.: B60W 10/06, B60W 10/08, B60W 10/26, B60W 10/30, B60W 20/13, B60W 20/15, B60W 20/16, B60W 30/188

(54) **VERFAHREN ZUM BETREIBEN EINES HYBRIDEN ANTRIEBSSYSTEMS UND KRAFTFAHRZEUG**

(30) Priorität: 18.11.2024 DE 102024133667
(71) Anmelder: Volkswagen Aktiengesellschaft, 38440 Wolfsburg (DE)
(72) Erfinder: Kraus, Stephan, 38440 Wolfsburg (DE); Bunkus, Johannes, 38440 Wolfsburg (DE)

(57) **Zusammenfassung**

Die vorliegende Erfindung betrifft ein Verfahren zum Betreiben eines hybriden Antriebssystems (1) eines Kraftfahrzeugs (2), wobei das hybride Antriebssystem (1) eine Verbrennungskraftmaschine (3) und eine Elektromaschine (4) aufweist. Gemäß dem Verfahren wird durch eine Steuerungsvorrichtung (6) des Kraftfahrzeugs (2) ein Puffer zwischen einem aktuellen Stromeffektivwert (IRMS) eines Batteriestroms einer Traktionsbatterie (7) des Kraftfahrzeugs (2) und einem dritten Stromgrenzwert (S₃) der Traktionsbatterie (7) bereitgehalten, sodass bei einem Regenerationsverfahren einer Abgasreinigungsvorrichtung (5) des Kraftfahrzeugs (2) der dritte Stromgrenzwert (S₃) nicht überschritten wird. Ferner betrifft die Erfindung ein Kraftfahrzeug (2), welches zur Durchführung des erfindungsgemäßen Verfahrens ausgebildet ist.

## Beschreibung

Die vorliegende Erfindung betrifft ein Verfahren zum Betreiben eines hybriden Antriebssystems eines Kraftfahrzeugs. Ferner betrifft die Erfindung ein Kraftfahrzeug, welches zur Durchführung eines erfindungsgemäßen Verfahrens ausgebildet ist.

Es sind hybride Antriebssysteme für Kraftfahrzeuge bekannt, bei welchen zum Antrieb des Kraftfahrzeugs eine Verbrennungskraftmaschine und eine Elektromaschine vorgesehen sind. Zum Betreiben der Elektromaschine weisen derartige hybride Antriebssystem eine Traktionsbatterie auf.

Traktionsbatterien unterliegen im Betrieb einer Alterung, deren Geschwindigkeit von Betriebsparametern der Traktionsbatterie abhängt, wie beispielsweise einem Ladezustand, einem effektiven Batteriestrom, einer Batterietemperatur oder dergleichen. Der effektive Batteriestrom ist ein Ersatzparameter zur Bestimmung eines Belastungsgrads eines elektrischen Systems, da elektrische Komponenten kurzzeitig Leistungen bzw. Ströme abgeben können, die größer sind als ihre Dauerleistung. Unter einem effektiven Batteriestrom wird im Rahmen der Erfindung ein Mittelwert eines Strom-Absolutwerts verstanden, der mitunter auch als "*Root Mean Square Current",* "*RMS-Strom"* oder "*IRMS"* bezeichnet wird.

Zum Verhindern einer übermäßigen Alterung bzw. zum Schonen der Traktionsbatterie ist eine Vielzahl verschiedener Maßnahmen bekannt, wie beispielsweise eine gezielte Temperierung der Traktionsbatterie, ein Vermeiden eines zu hohen oder zu niedrigen Ladezustands der Traktionsbatterie, insbesondere bei längerer Inaktivität des Kraftfahrzeugs oder eine Begrenzung des maximal zulässigen effektiven Batteriestroms.

Das Temperieren kann bei einer zu hohen Batterietemperatur beispielsweise ein gezieltes Kühlen der Traktionsbatterie und bei einer zu geringen Batterietemperatur beispielsweise ein gezieltes Erwärmen der Traktionsbatterie umfassen, sodass die Traktionsbatterie stets innerhalb eines vordefinierten Temperaturbereichs betrieben wird und somit einer geringeren Alterung unterliegt.

Ein zu hoher Ladezustand der Traktionsbatterie kann beispielsweise irreversible Nebenreaktionen in der Traktionsbatterie begünstigen, durch welche eine Gesamtkapazität der Traktionsbatterie reduzierbar ist. Bei einem zu geringen Ladezustand kann eine Tiefentladung der Traktionsbatterie drohen, durch welche ebenfalls irreversible Schäden an der Traktionsbatterie entstehen können. Durch ein gezieltes Ansteuern von Verbrauchern oder durch ein gezieltes Laden bzw. Entladen der Traktionsbatterie über eine externe Ladevorrichtung oder dergleichen ist der Ladezustand der Traktionsbatterie gezielt derart manipulierbar, dass die Alterung der Traktionsbatterie minimiert ist. Verfahren zum Betreiben von Antriebssystemen mit aktiver Begrenzung des Ladezustands der Traktionsbatterie sind beispielsweise aus den Dokumenten DE 10 2019 202 210 A1 und KR 10 2020 004 0012 A bekannt.

Durch die Begrenzung des maximal zulässigen effektiven Batteriestroms sind Stromgrenzen definiert, welche im Betrieb des Kraftfahrzeugs nicht oder allenfalls für wenige Sekunden überschritten werden können, sodass die Traktionsbatterie stets besonders batterieschonend betrieben wird.

Problematische Batterieströme können insbesondere dann auftreten, wenn das Kraftfahrzeug mit einer geringen Geschwindigkeit, beispielsweise von 50 km/h oder weniger, bewegt wird und ein Regenerationsprozess einer Abgasreinigungsvorrichtung des Kraftfahrzeugs, beispielsweise eines Katalysators, eines Partikelfilters oder dergleichen, durchgeführt werden soll. Zum Erzielen der hierfür erforderlichen Abgastemperaturen reicht die aktuelle Leistung der Verbrennungskraftmaschine nicht aus, sodass zum erfolgreichen Durchführen des Regenerationsprozesses ein Auflasten der Verbrennungskraftmaschine erforderlich ist.

Beim Auflasten wird die Verbrennungskraftmaschine mit einem höheren Drehmoment betrieben, als zum Antreiben des Kraftfahrzeugs erforderlich ist. Das überschüssige Drehmoment wird dann zum Antreiben der Elektromaschine zum Generieren von elektrischem Strom verwendet. Durch diese Maßnahme kann es vorkommen, dass der Batteriestrom derart erhöht wird, dass der vorgegebene Stromgrenzwert überschritten wird, sodass eine übermäßige Alterung oder sogar direkte Beschädigung der Traktionsbatterie hierdurch bewirkt werden kann.

Es ist daher Aufgabe der vorliegenden Erfindung, die voranstehend beschriebenen Nachteile bei einem Verfahren zum Betreiben eines hybriden Antriebssystems eines Kraftfahrzeugs zu beheben oder zumindest teilweise zu beheben. Insbesondere ist es Aufgabe der vorliegenden Erfindung, ein Verfahren zum Betreiben eines hybriden Antriebssystems eines Kraftfahrzeugs und ein Kraftfahrzeug mit einem hybriden Antriebssystem zu schaffen, die auf eine einfache und kostengünstige Art und Weise eine Überlastung der Traktionsbatterie vermeiden und somit eine reduzierte Alterungsgeschwindigkeit der Traktionsbatterie aufweisen.

Die voranstehende Aufgabe wird durch die Patentansprüche gelöst. Demnach wird die Aufgabe durch ein Verfahren zum Betreiben eines hybriden Antriebssystems eines Kraftfahrzeugs mit den Merkmalen des unabhängigen Anspruchs 1 sowie durch ein Kraftfahrzeug mit einem hybriden Antriebssystem mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren zum Betreiben eines hybriden Antriebssystems eines Kraftfahrzeugs beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zum Betreiben eines hybriden Antriebssystems eines Kraftfahrzeugs gelöst. Das Verfahren weist auf:
- Erkennen einer bevorstehenden Regeneration einer Abgasreinigungsvorrichtung des Kraftfahrzeugs durch eine Steuerungsvorrichtung des Kraftfahrzeugs,
- Bestimmen eines aktuellen Stromeffektivwertes eines Batteriestroms einer Traktionsbatterie des Kraftfahrzeugs durch die Steuerungsvorrichtung,
- gezieltes Reduzieren des Stromeffektivwertes des Batteriestroms unter einen ersten Stromgrenzwert durch die Steuerungsvorrichtung, wenn der aktuelle Stromeffektivwert einen zweiten Stromgrenzwert übersteigt,
- Durchführen der Regeneration der Abgasreinigungsvorrichtung durch Betreiben der Verbrennungskraftmaschine durch die Steuerungsvorrichtung derart, dass durch den Stromeffektivwert des Batteriestroms ein dritter Stromgrenzwert nicht überschritten wird, wobei der dritte Stromgrenzwert höher ist als der zweite Stromgrenzwert,
- Beenden der Regeneration der Abgasreinigungsvorrichtung durch die Steuerungsvorrichtung und
- Beenden des gezielten Reduzierens des Stromeffektivwertes des Batteriestroms durch die Steuerungsvorrichtung.

Das erfindungsgemäße Verfahren zum Betreiben eines hybriden Antriebssystems eines Kraftfahrzeugs kann beispielsweise mit einem als Vollhybridfahrzeug, Mildhybridfahrzeug oder Plug-In-Hybridfahrzeug ausgebildeten Kraftfahrzeug durchgeführt werden. Die Verbrennungskraftmaschine ist zum Bereitstellen eines Antriebsdrehmoments zum Antreiben des Kraftfahrzeugs ausgebildet. Die Elektromaschine ist zumindest zum Umwandeln von Bewegungsenergie in elektrische Energie ausgebildet. Vorzugsweise ist die Elektromaschine zusätzlich zum Unterstützen der Verbrennungskraftmaschine zum Antreiben des Kraftfahrzeugs ausgebildet. Es kann erfindungsgemäß vorgesehen sein, dass die Elektromaschine ausgebildet ist, das Kraftfahrzeug ohne Unterstützung durch die Verbrennungskraftmaschine anzutreiben. Die Traktionsbatterie ist zum Speichern und Bereitstellen elektrischer Energie ausgebildet.

Die Steuerungsvorrichtung des Kraftfahrzeugs erkennt die bevorstehende Regeneration der Abgasreinigungsvorrichtung des Kraftfahrzeugs. Unter einer bevorstehenden Regeneration der Abgasreinigungsvorrichtung wird im Rahmen der Erfindung verstanden, dass die Regeneration der Abgasreinigungsvorrichtung zu einem bestimmten zukünftigen Zeitpunkt während der Fahrt des Kraftfahrzeugs erfolgen soll. Das Bestimmen des Zeitpunkts der bevorstehenden Regeneration kann beispielsweise während der Fahrt des Kraftfahrzeugs durch Erfassen eines Auslösekriteriums, wie beispielsweise dem Differenzdruck über dem Katalysator / Partikelfilter, einer kumulierten Betriebszeit, einer Anzahl gefahrener Kilometer, einer Abgasmessung oder dergleichen, erfolgen. Alternativ kann die Steuerungsvorrichtung die bevorstehende Regeneration beispielsweise auch im geparkten Zustand des Kraftfahrzeugs ermitteln.

Ferner bestimmt die Steuerungsvorrichtung den aktuellen Stromeffektivwert des Batteriestroms (IRMS) der Traktionsbatterie des Kraftfahrzeugs. Dies erfolgt vorzugsweise während des Betriebs des Kraftfahrzeugs, beispielsweise während der Fahrt oder des kurzzeitigen Haltens des Kraftfahrzeugs, beispielsweise an einer Ampel, an einem Stoppschild oder im Stau. Der aktuelle Stromeffektivwert des Batteriestroms ist abhängig von der Leistung der Verbraucher, die von der Traktionsbatterie gespeist werden, sowie der Elektromaschine beim Laden der Traktionsbatterie im Generatorbetrieb.

Wenn der von der Steuerungsvorrichtung bestimmte aktuelle Stromeffektivwert den zweiten Stromgrenzwert übersteigt, reduziert die Steuerungsvorrichtung den Stromeffektivwert des Batteriestroms unter den ersten Stromgrenzwert. Das Reduzieren des Stromeffektivwerts des Batteriestroms kann beispielsweise durch das Abschalten oder Herunterregeln eines oder mehrerer Verbraucher bzw. hybridischen Fahrfunktionen des Kraftfahrzeugs erfolgen. Hierbei sind Nebenverbraucher bevorzugt, die für das vorschriftsmäßige Betreiben des Kraftfahrzeugs im Straßenverkehr nicht notwendig sind. Weiter bevorzugt kann das Reduzieren des Stromeffektivwerts des Batteriestroms beispielsweise durch Deaktivieren einer oder mehrerer Sonderbetriebsarten des Kraftfahrzeugs, welche einen Anstieg des Stromeffektivwerts des Batteriestroms bewirken können, erfolgen. Das Reduzieren des Stromeffektivwerts des Batteriestroms erfolgt rechtzeitig vor dem Durchführen der Regeneration der Abgasreinigungsvorrichtung, sodass ein Puffer zwischen dem Stromeffektivwert des Batteriestroms und dem dritten Stromgrenzwert bereitgestellt ist. Der erste Stromgrenzwert ist derart gewählt, dass der Puffer bei der Durchführung der Regeneration der Abgasreinigungsvorrichtung, beispielsweise durch Auflasten der Verbrennungskraftmaschine und der damit verbundenen höheren Generatorleistung der Elektromaschine, nur teilweise ausgenutzt wird. Der erste Stromgrenzwert wird vorzugsweise in Abhängigkeit einer Fahrzeuggeschwindigkeit und/oder Umgebungstemperatur und/oder Komponententemperatur einer Komponente des Kraftfahrzeugs bestimmt. Die Komponententemperatur kann beispielsweise eine Temperatur der Abgasreinigungsvorrichtung und/oder der Verbrennungskraftmaschine sein. Der zweite Stromgrenzwert ist vorzugsweise derart gewählt, dass der Puffer bei der Durchführung der Regeneration der Abgasreinigungsvorrichtung teilweise bis vollständig ausgenutzt wird. Der zweite Stromgrenzwert ist größer als der erste Stromgrenzwert. Der dritte Stromgrenzwert kann beispielsweise einem maximal zulässigen Stromgrenzwert des hybriden Antriebssystems entsprechen. Demnach ist der dritte Stromgrenzwert größer als der zweite Stromgrenzwert.

Anschließend wird durch die Steuerungsvorrichtung die Regeneration der Abgasreinigungsvorrichtung durchgeführt. Die Regeneration wird vorzugsweise bei einer als Partikelfilter und/oder Katalysator ausgebildeten Abgasreinigungsvorrichtung durchgeführt. Für die Regeneration wird die Verbrennungskraftmaschine durch die Steuerungsvorrichtung derart betrieben, dass eine vordefinierte Abgastemperatur für die Regeneration bereitgestellt wird. Hierbei wird durch die Steuerungsvorrichtung überwacht, dass der dritte Stromgrenzwert, der höher ist als der zweite Stromgrenzwert, nicht überschritten wird. Somit wird während des Regenerationsprozesses eine Überlastung der Traktionsbatterie vermieden und eine Regeneration der Abgasreinigungsvorrichtung gewährleistet.

Wenn die Abgasreinigungsvorrichtung vollständig, überwiegend oder zumindest teilweise regeneriert ist, beendet die Steuerungsvorrichtung den Regenerationsprozess. Bei einem verhältnismäßig großen Puffer erfolgt das Regenerieren vorzugsweise vollständig. Bei einem verhältnismäßig mittelgroßen Puffer erfolgt das Regenerieren vorzugsweise, bis die Abgasreinigungsvorrichtung überwiegend regeneriert ist, um eine Überlastung der Traktionsbatterie zu vermeiden. Bei einem verhältnismäßig kleinen Puffer erfolgt das Regenerieren vorzugsweise, bis die Abgasreinigungsvorrichtung zumindest teilweise regeneriert ist, um eine Überlastung der Traktionsbatterie zu vermeiden und eine bestimmungsgemäße Reinigung der Abgase der Verbrennungskraftmaschine weiterhin zu gewährleisten. Eine vollständige Regeneration kann beispielsweise zu einem späteren Zeitpunkt erfolgen, wenn der Puffer wieder größer ist.

Schließlich beendet die Steuerungsvorrichtung das gezielte Reduzieren des Batteriestroms. Hierbei wird vorzugsweise durch die Steuerungsvorrichtung sichergestellt, dass durch den Batteriestrom der dritte Stromgrenzwert nicht überschritten wird. Das Beenden des gezielten Reduzierens des Batteriestroms kann je nach aktueller Batteriestrombelastung während oder nach dem Beenden des Regenerierens erfolgen, wobei vorzugsweise ein Überschreiten des dritten Stromgrenzwerts stets vermieden wird.

Ein erfindungsgemäßes Verfahren zum Betreiben eines hybriden Antriebssystems eines Kraftfahrzeugs hat gegenüber herkömmlichen Verfahren den Vorteil, dass mit einfachen Mitteln sowie auf eine kostengünstige Art und Weise ein Regenerieren der Abgasreinigungsvorrichtung durchführbar ist, ohne dass hierbei eine Überlastung der Traktionsbatterie bewirkbar ist. Dies ist insbesondere bei einer verhältnismäßig geringen Fahrzeuggeschwindigkeit, beispielsweise von 40 km/h, 30 km/h oder weniger, von Vorteil, da die hierbei erzeugte Abgastemperatur üblicherweise zum Regenerieren nicht ausreicht und somit ein Auflasten der Verbrennungskraftmaschine erforderlich ist. Durch das temporäre Abwerfen der Verbraucher ist somit ein Stromkontingent für das Regenerieren reserviert, sodass eine Überlastung der Traktionsbatterie durch hohe Batterieströme vermieden ist. Auf diese Weise lassen sich eine Kapazitätsabnahme der Traktionsbatterie reduzieren und eine Lebensdauer der Traktionsbatterie verlängern.

Gemäß einer bevorzugten Weiterentwicklung der Erfindung kann bei einem Verfahren zum Betreiben eines hybriden Antriebssystems eines Kraftfahrzeugs vorgesehen sein, dass ein erster Stromgrenzwert verwendet wird, der kleiner gleich dem zweiten Stromgrenzwert ist. Bei einem ersten Stromgrenzwert, der dem zweiten Stromgrenzwert entspricht, wird beispielsweise lediglich der Betrieb von Nebenverbrauchern unterbunden oder zumindest eingeschränkt. Bei einem ersten Stromgrenzwert, der kleiner ist als der zweite Stromgrenzwert, werden beispielsweise der Betrieb von einem oder mehreren Nebenverbrauchern reduziert, sodass der aktuelle Stromeffektivwert des Batteriestroms reduziert wird. Dies hat den Vorteil, dass mit einfachen Mitteln sowie auf eine kostengünstige Art und Weise eine zuverlässige Regeneration der Abgasreinigungsvorrichtung bereitgestellt und eine Überlastung der Traktionsbatterie durch zu hohe Batterieströme vermieden ist.

Es ist erfindungsgemäß bevorzugt, dass ein zweiter Stromgrenzwert verwendet wird, der zwischen 50 % und 75 % des dritten Stromgrenzwertes entspricht. Vorzugsweise wird ein zweiter Stromgrenzwert verwendet, der zwischen 60 % und 70 % des dritten Stromgrenzwertes entspricht. Auf diese Weise ist sichergestellt, dass für die Regenerierung der Abgasreinigungsvorrichtung, beispielsweise für das Auflasten der Verbrennungskraftmaschine, ein Puffer von mindestens 25 % des zulässigen Stromgrenzwerts bereitgestellt ist. Dies hat den Vorteil, dass mit einfachen Mitteln sowie auf eine kostengünstige Art und Weise eine zuverlässige Regeneration der Abgasreinigungsvorrichtung bereitgestellt und eine Überlastung der Traktionsbatterie durch zu hohe Batterieströme vermieden ist.

Weiter bevorzugt wird zum gezielten Reduzieren des Stromeffektivwertes des Batteriestroms durch die Steuerungsvorrichtung ein Rekuperieren vollständig oder zumindest teilweise verhindert, wenn ein Ladezustand (SOC) der Traktionsbatterie größer ist als ein vordefinierter Ladezustandsschwellwert der Traktionsbatterie. Bei einer beispielsweise stark entladenen Traktionsbatterie kann die beim Rekuperieren gewonnene elektrische Energie oftmals im Wesentlichen problemlos in die Traktionsbatterie eingespeist werden. Bei einer vollständig oder zumindest nahezu vollständig geladenen Traktionsbatterie ist die Aufnahmefähigkeit der Traktionsbatterie für die beim Rekuperieren gewonnene elektrische Energie geringer. Zudem erwärmen sich Traktionsbatterien mit einem höherem SOC schneller als mit einem geringeren SOC, sodass eine Abhängigkeit zwischen dem dritten Stromgrenzwert und dem SOC besteht. Dies hat den Vorteil, dass mit einfachen Mitteln sowie auf eine kostengünstige Art und Weise eine zuverlässige Regeneration der Abgasreinigungsvorrichtung bereitgestellt und eine Überlastung der Traktionsbatterie durch zu hohe Batterieströme vermieden ist.

In einer besonders bevorzugten Ausgestaltung der Erfindung kann bei einem Verfahren zum Betreiben eines hybriden Antriebssystems eines Kraftfahrzeugs vorgesehen sein, dass zum gezielten Reduzieren des Stromeffektivwertes des Batteriestroms eine Lastpunktverschiebung der Verbrennungskraftmaschine durch die Steuerungsvorrichtung vollständig oder zumindest teilweise unterdrückt wird. Unter einer Lastpunktverschiebung wird im Rahmen der Erfindung verstanden, dass die Verbrennungskraftmaschine in gezielt einem Betriebsbereich betrieben wird, welcher mindestens einen Vorteil hat, wie beispielsweise einen besonders geringen Verbrauch, besonders geringe Emissionen oder dergleichen. Dabei unterscheidet sich dieser Betriebsbereich von einem zum Fortbewegen des Kraftfahrzeugs natürlichen Betriebsbereich der Verbrennungskraftmaschine. Um eine Auswirkung auf die Performance des Kraftfahrzeugs zu vermeiden, kann dieser Unterschied beispielsweise von der Elektromaschine kompensiert werden, beispielsweise durch Generatorbetrieb oder Bereitstellung eines zusätzlichen Antriebsdrehmoments. Dies hat den Vorteil, dass mit einfachen Mitteln sowie auf eine kostengünstige Art und Weise eine zuverlässige Regeneration der Abgasreinigungsvorrichtung bereitgestellt und eine Überlastung der Traktionsbatterie durch zu hohe Batterieströme vermieden ist.

Vorzugsweise wird zum gezielten Reduzieren des Stromeffektivwertes des Batteriestroms ein Instationärausgleich der Elektromaschine für die Verbrennungskraftmaschine durch die Steuerungsvorrichtung vollständig oder zumindest teilweise unterdrückt. Unter einem Instationärausgleich wird in Rahmen der Erfindung ein Unterstützen der Verbrennungskraftmaschine durch die Elektromaschine beim Beschleunigen des Kraftfahrzeugs verstanden. Verbrennungskraftmaschinen benötigen gerade im niedrigen Drehzahlbereich stets etwas Zeit, um einen Drehzahlbereich zu erreichen, in welchem sie ihr maximales Antriebsdrehmoment bereitstellen. Ein Fahrer des Kraftfahrzeugs, der das Gaspedal zum Beschleunigen herunterdrückt, empfindet eine Totzeit, in welcher das Kraftfahrzeug nicht oder langsamer beschleunigt wird als in einem optimalen Drehzahlbereich der Verbrennungskraftmaschine. Durch den Einsatz der Elektromaschine kann diese Totzeit überwunden werden, sodass das Kraftfahrzeug auch bei niedrigen Drehzahlen der Verbrennungskraftmaschine gleichmäßig beschleunigbar ist. Die Zuschaltung der Elektromaschine bewirkt einen höheren Batteriestrom, sodass die Batteriebelastung erhöht ist. Um einen ausreichenden Puffer für die Regeneration zu lassen, kann es daher vorteilhaft sein, auf den Komfort des Instationärausgleichs zumindest temporär zu verzichten. Dies hat den Vorteil, dass mit einfachen Mitteln sowie auf eine kostengünstige Art und Weise eine zuverlässige Regeneration der Abgasreinigungsvorrichtung bereitgestellt und eine Überlastung der Traktionsbatterie durch zu hohe Batterieströme vermieden ist.

Gemäß einer bevorzugten Ausführungsform der Erfindung kann bei einem Verfahren zum Betreiben eines hybriden Antriebssystems eines Kraftfahrzeugs vorgesehen sein, dass der erste Stromgrenzwert durch die Steuerungsvorrichtung in Abhängigkeit von Verkehrsdaten im Umfeld des Kraftfahrzeugs bestimmt wird. Die Verkehrsdaten können beispielsweise von einem Server, einer Cloud, von einer Fahrzeugsensorik des Kraftfahrzeugs, direkt von anderen Kraftfahrzeugen oder dergleichen bereitgestellt werden. Die Verkehrsdaten können beispielsweise einen Verkehrsfluss, eine Verkehrsdichte, die Anzahl der Verkehrsteilnehmer im Umkreis des Kraftfahrzeugs und/oder auf der weiteren für die Regeneration relevanten Route des Kraftfahrzeugs aufweisen. Ferner können die Verkehrsdaten Informationen über eine Fahrbahnbeschaffenheit, Geschwindigkeitsbegrenzungen, Baustellen, Gefahrenstellen oder dergleichen aufweisen. Über die Verkehrsdaten lassen sich zukünftige Fahrzeuggeschwindigkeiten abschätzen und lässt sich somit ein erforderlicher Puffer für die Regeneration der Abgasreinigungsvorrichtung ermitteln, also beispielsweise ein erforderlicher Abstand zwischen dem ersten Stromgrenzwert und dem dritten Stromgrenzwert. Dieser Puffer kann bei zu erwartenden höheren Geschwindigkeiten, bei welchen eine Auflastung der Verbrennungskraftmaschine nicht oder nur geringer erforderlich sein kann, kleiner ausfallen als bei geringeren Geschwindigkeiten, die zum Regenerieren eine stärkere Auflastung erfordern. Dies hat den Vorteil, dass mit einfachen Mitteln sowie auf eine kostengünstige Art und Weise eine zuverlässige Regeneration der Abgasreinigungsvorrichtung bereitgestellt und eine Überlastung der Traktionsbatterie durch zu hohe Batterieströme vermieden ist.

Besonders bevorzugt wird der erste Stromgrenzwert durch die Steuerungsvorrichtung in Abhängigkeit von Daten eines Navigationssystems des Kraftfahrzeugs bestimmt. Über die Daten des Navigationssystems lassen sich ebenfalls zukünftige Fahrzeuggeschwindigkeiten abschätzen und somit ein erforderlicher Puffer für die Regeneration der Abgasreinigungsvorrichtung ermitteln. Dies hat den Vorteil, dass mit einfachen Mitteln sowie auf eine kostengünstige Art und Weise eine zuverlässige Regeneration der Abgasreinigungsvorrichtung bereitgestellt und eine Überlastung der Traktionsbatterie durch zu hohe Batterieströme vermieden ist.

Es ist erfindungsgemäß bevorzugt, dass der erste Stromgrenzwert durch die Steuerungsvorrichtung in Abhängigkeit einer Fahrstatistik des Kraftfahrzeugs und/oder eines Fahrers des Kraftfahrzeugs bestimmt wird. Hierfür kann beispielsweise eine aktuelle Fahrweise des Fahrers, beispielsweise seit Fahrtantritt, herangezogen werden. Alternativ oder zusätzlich kann hierfür ein zuvor angelegtes Benutzerprofil des Fahrers ausgewertet werden. Dies hat den Vorteil, dass mit einfachen Mitteln sowie auf eine kostengünstige Art und Weise eine zuverlässige Regeneration der Abgasreinigungsvorrichtung bereitgestellt und eine Überlastung der Traktionsbatterie durch zu hohe Batterieströme vermieden ist.

Gemäß einem zweiten Aspekt der Erfindung wird die Aufgabe durch ein Kraftfahrzeug gelöst. Das Kraftfahrzeug weist ein hybrides Antriebssystem mit einer Verbrennungskraftmaschine zum Antreiben des Kraftfahrzeugs und einer Elektromaschine zum Antreiben des Kraftfahrzeugs auf. Erfindungsgemäß ist das Kraftfahrzeug zur Durchführung eines erfindungsgemäßen Verfahrens ausgebildet. Bei dem erfindungsgemäßen Kraftfahrzeug ergeben sich sämtliche Vorteile, die bereits zu einem Verfahren zum Betreiben eines hybriden Antriebssystems eines Kraftfahrzeugs gemäß dem ersten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise ein Regenerieren der Abgasreinigungsvorrichtung durchführbar ist, ohne dass hierbei eine Überlastung der Traktionsbatterie bewirkbar ist. Dies ist insbesondere bei einer verhältnismäßig geringen Fahrzeuggeschwindigkeit, beispielsweise von 40 km/h, 30 km/h oder weniger, von Vorteil, da die hierbei erzeugte Abgastemperatur üblicherweise zum Regenerieren nicht ausreicht und somit ein Auflasten der Verbrennungskraftmaschine erforderlich ist. Durch das temporäre Abwerfen der Verbraucher bzw. Nebenverbraucher bzw. hybridischen Fahrfunktionen ist somit ein Stromkontingent für das Regenerieren reserviert, sodass eine Überlastung der Traktionsbatterie durch hohe Batterieströme vermieden ist. Auf diese Weise lassen sich eine Kapazitätsabnahme der Traktionsbatterie reduzieren und eine Lebensdauer der Traktionsbatterie verlängern.

Ein erfindungsgemäßes Verfahren zum Betreiben eines hybriden Antriebssystems eines Kraftfahrzeugs sowie ein erfindungsgemäßes Kraftfahrzeug werden nachfolgend anhand von Zeichnungen näher erläutert. Es zeigen jeweils schematisch:
- Figur 1: in einem l-t-Diagramm/s-t-Diagramm einen Verlauf des Stromeffektivwertes und eines dazugehörigen Fahrweges über der Zeit bei einem Kraftfahrzeug gemäß dem Stand der Technik,
- Figur 2: in einem l-t-Diagramm/s-t-Diagramm einen Verlauf des Stromeffektivwertes über die Zeit bei einem Kraftfahrzeug gemäß einer bevorzugten Ausführungsform der Erfindung,
- Figur 3: in einer Seitenansicht eine bevorzugte Ausführungsform eines erfindungsgemäßen Kraftfahrzeugs und
- Figur 4: in einem Ablaufdiagramm eine bevorzugte Ausführungsform eines erfindungsgemäßen Verfahrens.

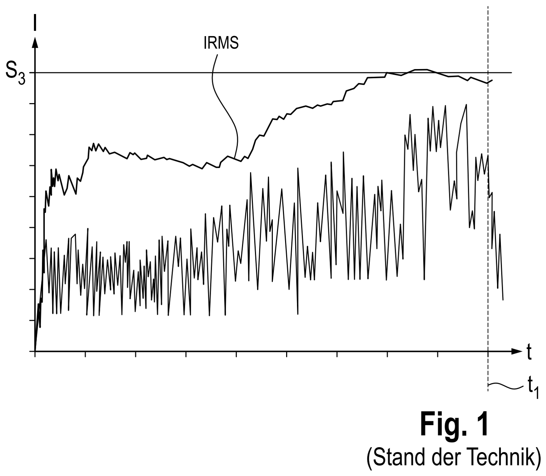

Elemente mit gleicher Funktion und Wirkungsweise sind in den Fig. 1 bis 4 jeweils mit denselben Bezugszeichen versehen.

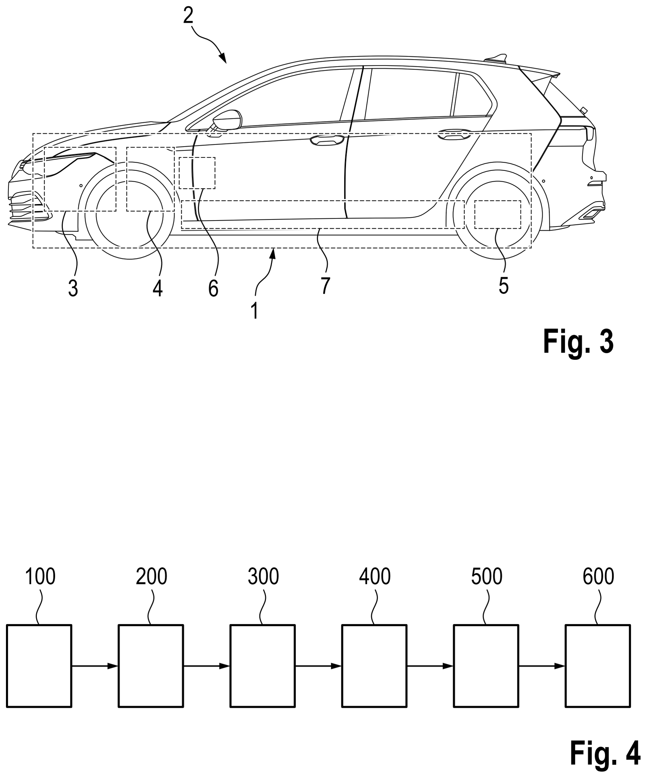

In Fig. 1 ist der Verlauf des Stromeffektivwertes (IRMS) über die Zeit bei einem Kraftfahrzeug 2 (vgl. Fig. 3) gemäß dem Stand der Technik schematisch in einem I-t-Diagramm sowie einem s-t-Diagramm dargestellt. Das I-t-Diagramm zeigt den Zeitraum vor dem Regenerieren einer Abgasreinigungsvorrichtung 5 (vgl. Fig. 3) des Kraftfahrzeugs 2. Wie aus dem Diagramm gut erkennbar, steigt der Stromeffektivwert (IRMS) solange an, bis dieser beim Zeitpunkt des Regenerationsstarts t₁ der Abgasreinigungsvorrichtung 5 knapp unterhalb eines dritten Stromgrenzwertes S₃ liegt. Ein Auflasten einer Verbrennungskraftmaschine 3 (vgl. Fig. 3) des Kraftfahrzeugs 2 zum Regenerieren der Abgasreinigungsvorrichtung 5 ist somit zum Zeitpunkt des Regenerationsstarts t₁ nicht möglich, ohne hierdurch den dritten Stromgrenzwert S₃ zu überschreiten und eine Traktionsbatterie 7 (vgl. Fig. 3) des Kraftfahrzeugs 2 übermäßig zu belasten. Das s-t-Diagramm zeigt den dazugehörigen Fahrweg des Kraftfahrzeugs 2 über der Zeit.

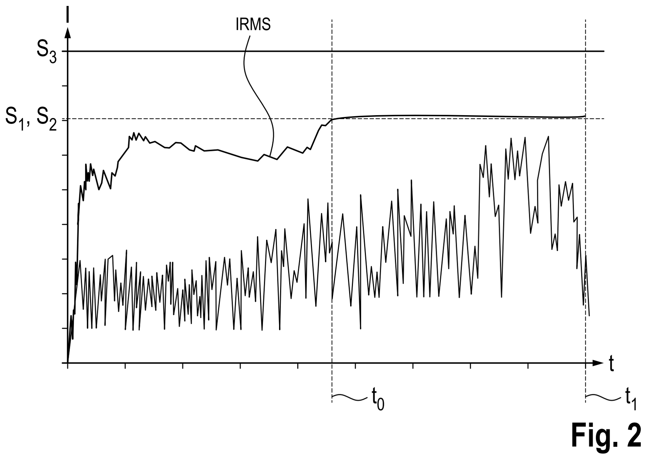

Fig. 2 zeigt einen Verlauf des Stromeffektivwertes (IRMS) über die Zeit bei einem Kraftfahrzeug 2 (vgl. Fig. 3), gemäß einer bevorzugten Ausführungsform der Erfindung, schematisch in einem l-t-Diagramm. Das s-t-Diagramm zeigt den dazugehörigen Fahrweg des Kraftfahrzeugs 2 über der Zeit. Wie aus dem I-t-Diagramm gut erkennbar ist, steigt der Stromeffektivwert (IRMS) solange an, bis dieser zum Zeitpunkt des Reduzierungsstarts t₀ einen zweiten Stromgrenzwert S₂ erreicht, welcher geringer ist als der dritte Stromgrenzwert S₃. Durch Sperren von Sonderbetriebsarten, z.B. hybridischen Fahrfunktionen des Kraftfahrzeugs 2 wird somit bis zum Zeitpunkt des Regenerationsstarts t₁ der Abgasreinigungsvorrichtung 5 erreicht, dass der Stromeffektivwert (IRMS) bei einem erstem Stromgrenzwert S₁ bleibt, welcher dem zweiten Stromgrenzwert S₂ entspricht. Somit ist beim Zeitpunkt des Regenerationsstarts t₁ ein Puffer zwischen dem Stromeffektivwert (IRMS) und dem dritten Stromgrenzwert S₃ bereitgestellt. Ein Auflasten der Verbrennungskraftmaschine 3 (vgl. Fig. 3) des Kraftfahrzeugs 2 zum Regenerieren der Abgasreinigungsvorrichtung 5 ist somit zum Zeitpunkt des Regenerationsstarts t₁ möglich, ohne hierdurch den dritten Stromgrenzwert S₃ zu überschreiten und die Traktionsbatterie 7 (vgl. Fig. 3) des Kraftfahrzeugs 2 übermäßig zu belasten.

In Fig. 3 ist eine bevorzugte Ausführungsform eines erfindungsgemäßen Kraftfahrzeugs 2 schematisch in einer Seitenansicht abgebildet. Das Kraftfahrzeug 2 weist ein hybrides Antriebssystem 1 auf. Das hybride Antriebssystem 1 weist zum Antreiben des Kraftfahrzeugs 2 eine Verbrennungskraftmaschine 3 und eine Elektromaschine 4 auf. Zum Reinigen der Abgase der Verbrennungskraftmaschine 3 weist das hybride Antriebssystem 1 eine Abgasreinigungsvorrichtung 5 auf. Zum Steuern des hybriden Antriebssystems 1 weist das hybride Antriebssystem 1 eine Steuerungsvorrichtung 6 auf. Zum Versorgen der Elektromaschine 4 mit elektrischer Energie weist das hybride Antriebssystem 1 eine Traktionsbatterie auf.

Fig. 4 zeigt eine bevorzugte Ausführungsform eines erfindungsgemäßen Verfahrens schematisch in einem Ablaufdiagramm. In einer ersten Verfahrensaktion 100 erkennt die Steuerungsvorrichtung 6 des Kraftfahrzeugs 2 eine bevorstehende Regeneration einer Abgasreinigungsvorrichtung 5 des Kraftfahrzeugs 2, wie beispielsweise eines Partikelfilters, eines Katalysators oder dergleichen. In einer zweiten Verfahrensaktion 200 bestimmt die Steuerungsvorrichtung den aktuellen Stromeffektivwert (IRMS) des Batteriestroms der Traktionsbatterie 7 des Kraftfahrzeugs 2 und vergleicht diesen mit dem zweiten Stromgrenzwert S₂. In einer dritten Verfahrensaktion 300 reduziert die Steuerungsvorrichtung 6 den Stromeffektivwert (IRMS) des Batteriestroms unter den ersten Stromgrenzwert S₁, wenn der aktuelle Stromeffektivwert (IRMS) größer ist als der zweite Stromgrenzwert S₂.

In einer vierten Verfahrensaktion 400 führt die Steuerungsvorrichtung 6 die Regeneration der Abgasreinigungsvorrichtung 5 durch Betreiben der Verbrennungskraftmaschine 3 durch. Hierbei stellt die Steuerungsvorrichtung 6 sicher, dass durch den Stromeffektivwert (IRMS) des Batteriestroms der dritte Stromgrenzwert S₃ nicht überschritten wird. In einer fünften Verfahrensaktion 500 beendet die Steuerungsvorrichtung 6 die Regeneration der Abgasreinigungsvorrichtung 5. In einer sechsten Verfahrensaktion 600 beendet die Steuerungsvorrichtung 6 das gezielte Reduzieren des Stromeffektivwertes (IRMS) des Batteriestroms vorzugsweise derart, dass durch den Batteriestrom der dritte Stromgrenzwert S₃ nicht überschritten wird.

### Bezugszeichenliste

- 1: hybrides Antriebssystem
- 2: Kraftfahrzeug
- 3: Verbrennungskraftmaschine
- 4: Elektromaschine
- 5: Abgasreinigungsvorrichtung
- 6: Steuerungsvorrichtung
- 7: Traktionsbatterie

- **IRMS**: **Stromeffektivwert**
- S₁: erster Stromgrenzwert
- S₂: zweiter Stromgrenzwert
- S₃: dritter Stromgrenzwert
- t₀: Reduzierungsstart
- t₁: Regenerationsstart

- 100: erste Verfahrensaktion
- 200: zweite Verfahrensaktion
- 300: dritte Verfahrensaktion
- 400: vierte Verfahrensaktion
- 500: fünfte Verfahrensaktion
- 600: sechste Verfahrensaktion

## Patentansprüche

1. Verfahren zum Betreiben eines hybriden Antriebssystems (1) eines Kraftfahrzeugs (2), wobei das hybride Antriebssystem (1) eine Verbrennungskraftmaschine (3) und eine Elektromaschine (4) aufweist, aufweisend:
- Erkennen einer bevorstehenden Regeneration einer Abgasreinigungsvorrichtung (5) des Kraftfahrzeugs (2) durch eine Steuerungsvorrichtung (6) des Kraftfahrzeugs (2),
- Bestimmen eines aktuellen Stromeffektivwertes (IRMS) eines Batteriestroms einer Traktionsbatterie (7) des Kraftfahrzeugs (2) durch die Steuerungsvorrichtung (6),
- gezieltes Reduzieren des Stromeffektivwertes (IRMS) des Batteriestroms unter einen ersten Stromgrenzwert (S₁) durch die Steuerungsvorrichtung (6), wenn der aktuelle Stromeffektivwert (IRMS) einen zweiten Stromgrenzwert (S₂) übersteigt,
- Durchführen der Regeneration der Abgasreinigungsvorrichtung (5) durch Betreiben der Verbrennungskraftmaschine (3) durch die Steuerungsvorrichtung (6) derart, dass durch den Stromeffektivwert (IRMS) des Batteriestroms ein dritter Stromgrenzwert (S₃) nicht überschritten wird, wobei der dritte Stromgrenzwert (S₃) höher ist als der zweite Stromgrenzwert (S₂),
- Beenden der Regeneration der Abgasreinigungsvorrichtung (5) durch die Steuerungsvorrichtung (6) und
- Beenden des gezielten Reduzierens des Stromeffektivwertes (IRMS) des Batteriestroms durch die Steuerungsvorrichtung (6).

2. Verfahren nach Anspruch 1,
**dadurch gekennzeichnet,**
**dass** ein erster Stromgrenzwert (S₁) verwendet wird, der kleiner gleich dem zweiten Stromgrenzwert (S₂) ist.

3. Verfahren nach Anspruch 1 oder 2,
**dadurch gekennzeichnet,**
**dass** ein zweiter Stromgrenzwert (S₂) verwendet wird, der zwischen 50 % und 75 % des dritten Stromgrenzwertes (S₃) entspricht.

4. Verfahren nach einem der vorangegangenen Ansprüche,
**dadurch gekennzeichnet,**
**dass** zum gezielten Reduzieren des Stromeffektivwertes (IRMS) des Batteriestroms durch die Steuerungsvorrichtung (6) ein Rekuperieren vollständig oder zumindest teilweise verhindert wird, wenn ein Ladezustand der Traktionsbatterie (7) größer ist als ein vordefinierter Ladezustandsschwellwert der Traktionsbatterie (7).

5. Verfahren nach einem der vorangegangenen Ansprüche,
**dadurch gekennzeichnet,**
**dass** zum gezielten Reduzieren des Stromeffektivwertes (IRMS) des Batteriestroms eine Lastpunktverschiebung der Verbrennungskraftmaschine (3) durch die Steuerungsvorrichtung (6) vollständig oder zumindest teilweise unterdrückt wird.

6. Verfahren nach einem der vorangegangenen Ansprüche,
**dadurch gekennzeichnet,**
**dass** zum gezielten Reduzieren des Stromeffektivwertes (IRMS) des Batteriestroms ein Instationärausgleich der Elektromaschine (4) für die Verbrennungskraftmaschine (3) durch die Steuerungsvorrichtung (6) vollständig oder zumindest teilweise unterdrückt wird.

7. Verfahren nach einem der vorangegangenen Ansprüche,
**dadurch gekennzeichnet,**
**dass** der erste Stromgrenzwert (S₁) durch die Steuerungsvorrichtung (6) in Abhängigkeit von Verkehrsdaten im Umfeld des Kraftfahrzeugs (2) bestimmt wird.

8. Verfahren nach einem der vorangegangenen Ansprüche,
**dadurch gekennzeichnet,**
**dass** der erste Stromgrenzwert (S₁) durch die Steuerungsvorrichtung (6) in Abhängigkeit von Daten eines Navigationssystems des Kraftfahrzeugs (2) bestimmt wird.

9. Verfahren nach einem der vorangegangenen Ansprüche,
**dadurch gekennzeichnet,**
**dass** der erste Stromgrenzwert (S₁) durch die Steuerungsvorrichtung (6) in Abhängigkeit einer Fahrstatistik des Kraftfahrzeugs (2) und/oder eines Fahrers des Kraftfahrzeugs (2) bestimmt wird.

10. Kraftfahrzeug (2), aufweisend ein hybrides Antriebssystem (1) mit einer Verbrennungskraftmaschine (3) zum Antreiben des Kraftfahrzeugs (2) und einer Elektromaschine (4) zum Antreiben des Kraftfahrzeugs (2),
**dadurch gekennzeichnet,**
**dass** das Kraftfahrzeug (2) zur Durchführung eines Verfahrens nach einem der vorangegangenen Ansprüche ausgebildet ist.
